# EUROPÄISCHE PATENTANMELDUNG

(11) **EP 2 045 144 A1**
(43) Veröffentlichungstag der Anmeldung: **08.04.2009**
(21) Anmeldenummer: 07464007.9
(22) Anmeldetag: 02.10.2007
(51) Int. Cl.: B60R 21/013, B60R 21/0136

(54) **Verfahren zum Erkennen einer Kollisionsseite bei einem Frontalaufprall**

(71) Anmelder: Continental Automotive GmbH, 30165 Hannover (DE)
(72) Erfinder: Sortoc, Cornel Aurel, 300030 Timisoara (RO)

(57) **Zusammenfassung**

Die Erfindung betrifft ein Verfahren zum Erkennen einer Kollisionsseite bei einem Frontalaufprall mit teilweiser Überdeckung oder einem Winkel auf ein Kraftfahrzeug (1) zur Ansteuerung eines Personenschutzsystems. Es wird eine erste, einer Beschleunigung entsprechende Signalgröße (ECS_L; SIS_L) ermittelt, die von einem der linken Seite des Kraftfahrzeugs zugeordneten Beschleunigungssensor (3L; 4L) abgegeben wird. Eine zweite, einer Beschleunigung entsprechende Signalgröße (ECS_R; SIS_R) wird ermittelt, die von einem der rechten Seite des Kraftfahrzeugs zugeordneten Beschleunigungssensor (3R; 4R) abgegeben wird. Des Weiteren wird ein jeweiliges Signalniveau der ersten und der zweiten Signalgröße ermittelt. Aus der ersten und der zweiten Signalgröße wird eine Vergleichsgröße (sw_Difference) ermittelt, welche ein Maß dafür ist, ob die erste oder die zweite Signalgröße betragsmäßig größer als die jeweils andere Signalgröße ist. Aus der Vergleichsgröße (sw_Difference) wird auf die Kollisionsseite des Aufpralls geschlossen und ein der Kollisionsseite zugeordnetes Personenschutzmittel, insbesondere ein Seiten- oder Fenster-Airbag, angesteuert.

## Beschreibung

Die Erfindung betrifft ein Verfahren zum Erkennen einer Kollisionsseite bei einem Frontalaufprall mit teilweiser Überdeckung oder unter einem Winkel auf ein Kraftfahrzeug zur Ansteuerung eines Personenschutzsystems.

Bei einem Frontalaufprall der oben bezeichneten Art kann es unter bestimmten Umständen erforderlich sein, zusätzlich zu den Front-Airbags auch Seiten-Airbags (sog. Sidebags) oder Fenster-Airbags (sog. Windowbags) auszulösen. Hierbei sollen lediglich diejenigen Seiten- bzw. Fenster-Airbags ausgelöst werden, welche auf der Kollisionsseite des Kraftfahrzeugs liegen. Die Auslösung der seitlich angeordneten Personenschutzmittel soll erfolgen, um die Insassen des Kraftfahrzeugs im Falle des Frontalaufpralls vor ernsten Verletzungen zu schützen, welche durch die Drehbewegung des Fahrzeugs und den dadurch verursachten möglichen Anprall des Kopfes eines Insassen an der A-Säule des Kraftfahrzeugs hervorgerufen werden können.

Für eine zuverlässige Schutzwirkung müssen die seitlichen Personenschutzmittel innerhalb eines bestimmten Zeitfensters von Beginn einer Auslöseentscheidung an aktiviert werden. In der Praxis ist dieser Wert häufig auf maximal 20 Millisekunden begrenzt. Daher ist es erforderlich, die Kollisionsseite bereits zu Beginn des Aufpralls zu erkennen.

Es ist daher Aufgabe der vorliegenden Erfindung, ein Verfahren anzugeben, mit welchem die Erkennung einer Kollisionsseite bei einem Frontalaufprall mit teilweiser Überdeckung oder einem Winkel zur Ansteuerung eines Personenschutzsystems möglich ist. Ferner soll ein Ansteuersystem für ein Personenschutzmittel in einem Kraftfahrzeug angegeben werden, welches die Erkennung der Kollisionsseite bei einem Frontalaufprall mit teilweiser Überdeckung oder einem Winkel auf das Kraftfahrzeug ermöglicht.

Diese Aufgaben werden mit den Merkmalen der unabhängigen Patentansprüche gelöst. Vorteilhafte Ausgestaltungen ergeben sich aus den abhängigen Patentansprüchen.

Bei dem erfindungsgemäßen Verfahren wird eine erste, einer Beschleunigung entsprechende Signalgröße ermittelt, die von einem der linken Seite des Kraftfahrzeugs zugeordneten Beschleunigungssensor abgegeben wird. Es wird eine zweite, einer Beschleunigung entsprechende Signalgröße ermittelt, die von einem der rechten Seite des Kraftfahrzeugs zugeordneten Beschleunigungssensor abgegeben wird. Ferner wird ein jeweiliges Signalniveau der ersten und der zweiten Signalgröße ermittelt. Aus der ersten und der zweiten Signalgröße wird eine Vergleichsgröße ermittelt, welche ein Maß dafür ist, ob die erste oder die zweite Signalgröße betragsmäßig größer als die jeweils andere Signalgröße ist. Aus der Vergleichsgröße wird auf die Kollisionsseite des Aufpralls geschlossen und ein der Kollisionsseite zugeordnetes Personenschutzmittel, insbesondere ein Seiten- oder Fenster-Airbag, angesteuert. Die Schritte des erfindungsgemäßen Verfahrens werden zweckmäßigerweise periodisch in vorgegebenen Zeitabständen, z.B. eine Millisekunde, durchgeführt, um Fehler bei der Bestimmung der Kollisionsseite zu minimieren.

Ein erfindungsgemäßes Ansteuersystem für ein Personenschutzmittel in einem Kraftfahrzeug umfasst eine Auswerteeinheit, einem der linken Karosserieseite zugeordneten Beschleunigungssensor, der eine einem Beschleunigungssignal entsprechende erste Signalgröße an die Auswerteeinheit abgegeben kann, sowie einen der rechten Karosserieseite zugeordneten Beschleunigungssensor, der eine einem Beschleunigungssignal entsprechende zweite Signalgröße an die Auswerteeinheit abgeben kann. Die Auswerteeinheit ist dazu ausgebildet, ein jeweiliges Signalniveau der ersten und der zweiten Signalgröße zu ermitteln und aus der ersten und der zweiten Signalgröße eine Vergleichsgröße zu ermitteln, welche ein Maß dafür ist, ob die erste oder die zweite Signalgröße betragsmäßig größer als die jeweils andere Signalgröße ist. Die Auswerteeinheit ist dazu ausgebildet, aus der Vergleichsgröße auf die Kollisionsseite des Aufpralls zu schließen und einen der Kollisionsseite zugeordneten Parameterwert einer Ansteuereinheit für das Personenschutzmittel zur Verfügung zu stellen. Die der linken und der rechten Karosserieseite zugeordneten Beschleunigungssensoren korrespondieren zueinander, d.h. sie beruhen auf dem gleichen physikalischen Prinzip.

Die Erfindung ermöglicht die Bestimmung der Kollisionsseite ohne gegenüber herkömmlichen Personenschutzsystemen zusätzliche Sensoren oder Auswerteeinheiten zu benötigen. Stattdessen kann auf die in einem Kraftfahrzeug vorhandenen Einrichtungen, welche zur Detektion eines Aufpralls und Ermittlung einer Auslöseentscheidung für die Personenschutzmittel verwendet werden, zurückgegriffen werden. Durch die Erfindung ist sichergestellt, dass die Erkennung der Kollisionsseite im Falle eines Frontalaufpralls mit teilweiser Überdeckung oder unter einem Winkel in kürzester Zeit erfolgen kann, so dass eine rechtzeitige Auslösung des der Kollisionsseite zugeordneten Personenschutzmittels möglich ist.

In einer ersten zweckmäßigen Ausgestaltung des erfindungsgemäßen Verfahrens wird die erste Signalgröße aus einer, insbesondere nach links gerichteten, Querbeschleunigung oder einer in Fahrtrichtung wirkenden Längsbeschleunigung ermittelt. In einer weiteren Ausgestaltung wird die zweite Signalgröße aus einer, insbesondere nach rechts gerichteten, Querbeschleunigung oder einer in Fahrtrichtung wirkenden Längsbeschleunigung ermittelt.

Es ist zweckmäßig, wenn die erste und/oder die zweite Signalgröße aus einem gefilterten Beschleunigungssignal ermittelt werden. Durch die Filterung können Peaks des reinen Beschleunigungssignals sowohl in positiver als auch in negativer Richtung im Falle eines Aufpralls eliminiert werden, welche zu einer Verfälschung der durch das erfindungsgemäße Verfahren ermittelten Vergleichsgröße führen würden. Bei der Verwendung eines reinen Beschleunigungssignals könnte daher unter Umständen nicht eindeutig die Kollisionsseite bestimmt werden. Ferner könnte dadurch der Umstand auftreten, dass die Auslösung des einer ermittelten Kollisionsseite zugeordneten Personenschutzmittels nicht rechtzeitig erfolgt.

Als besonders einfache Lösung hat es sich herausgestellt, wenn als gefiltertes Beschleunigungssignal ein aus den gemessenen Beschleunigungswerten ermittelter Geschwindigkeitswert verwendet wird. Die Geschwindigkeit ist im Vergleich zu einer Beschleunigung ein stabileres Kriterium und weist im Falle eines Aufpralls eine eindeutige Polarität, d.h. eine eindeutige Vergleichsgröße, auf. Im Rahmen der vorliegenden Erfindung kann die Geschwindigkeit z.B. durch Aufsummieren jeweiliger Beschleunigungswerte gebildet werden.

In einer weiteren zweckmäßigen Ausgestaltung ist für die linke Seite und für die rechte Seite des Kraftfahrzeugs jeweils ein Zähler vorgesehen, wobei der Zähler für die linke Seite erhöht/erniedrigt und der Zähler für die rechte Seite auf einen Ausgangswert gesetzt wird, wenn aus der Vergleichgröße auf eine Kollision mit der linken Seitenhälfte geschlossen wird, und der Zähler für die rechte Seite erhöht/erniedrigt und der Zähler für die linke Seite auf einen Ausgangswert gesetzt wird, wenn aus der Vergleichsgröße auf eine Kollision mit der rechten Seitenhälfte geschlossen wird. Es ist ferner vorgesehen, dass die Zähler für die linke und die rechte Seite auf den jeweiligen Werten verbleiben, wenn aus der Vergleichsgröße weder auf eine Kollision mit der rechten noch mit der linken Seitenhälfte geschlossen werden kann. Das Vorsehen einer Zähllogik indiziert den physikalischen Hintergrund eines Frontalaufpralls mit teilweiser Überdeckung oder einem Winkel in einer bestimmten Richtung (links oder rechts) für eine bestimmte Zeit. Durch das Setzen des Zählers auf einen Ausgangswert können Oszillationen verhindert werden, welche beispielsweise in sog. Misuse-Fällen auftreten können, welche keine Auslösung eines Personenschutzsystems nach sich ziehen sollen. Unter einem Misuse wird beispielsweise der Aufprall eines Steines oder Balles oder ein Anfahren eines Objekts bei niedrigen Geschwindigkeiten verstanden.

Gemäß einer weiteren Ausgestaltung werden die Zähler für die linke Seite und für die rechte Seite jeweils mit einem Schwellenwert verglichen, wobei beim Erreichen des Schwellenwerts ein einer Auslösesituation entsprechender Wert für die betreffende Karosserieseite in einem Speicher hinterlegt wird, der durch eine Ansteuereinheit des Personenschutzsystems auslesbar ist. Der Schwellenwert kann beispielsweise in einem EEPROM hinterlegt sein. Das Vorsehen eines Schwellenwerts bedeutet, dass ein minimaler Zeitrahmen für die Ermittlung einer bestimmten Kollisionsseite erforderlich ist. Beispielsweise wird der Schwellenwert bei einer kontinuierlichen Durchführung des Verfahrens jede Millisekunde erst nach zehn Millisekunden erreicht. Der in dem Speicher hinterlegte Wert kann beispielsweise eine Boole'sche Variable für die ermittelte Kollisionsseite sein. Diese Variable (sog. Flag) kann in der Ansteuereinheit verwendet werden, um das der betreffenden Kollisionsseite zugeordnete Personenschutzmittel auszulösen.

In einer weiteren Ausführungsform wird die Ermittlung der Vergleichsgröße beendet, sobald in dem Speicher der einer Auslösesituation entsprechende Wert gespeichert ist. Dies bedeutet, nachdem für eine Kollisionsseite ein Flag auf z.B. "wahr" oder "true" gesetzt ist, dass das erfindungsgemäße Verfahren nicht mehr durchgeführt wird und die Zustandsvariable für die Kollisionsseite beibehalten wird, bis ein Reset durchgeführt wird. Nach einem solchen Reset beginnt das Verfahren von vorne, wobei die Zähler für die linke und die rechte Seite im Rahmen des Resets auf den Ausgangswert gesetzt werden.

In dem Fall, in dem bei einer Kollision keine Karosserieseite eines Aufpralls ermittelt werden kann, wird in dem Speicher für die linke und die rechte Seite jeweils ein einer Auslösesituation entsprechender Wert hinterlegt. Hierdurch wird eine Rückfall-Lösung bereitgestellt, bei der in einem solchen Fall, bei dem ein Aufprall zwar detektiert wird, jedoch eine Kollisionsseite nicht bestimmbar ist, die beiden möglichen Kollisionsseiten zugeordneten Personenschutzmittel für einen bestmöglichen Schutz der Fahrzeuginsassen ausgelöst werden.

Von der Erfindung ist ferner ein Computerprogrammprodukt umfasst, das direkt in den internen Speicher eines digitalen Computers geladen werden kann und Softwarecodeabschnitte umfasst, mit denen die Schritte gemäß dem vorher beschriebenen Verfahren ausgeführt werden, wenn das Produkt auf einem Computer läuft.

Gemäß einer Ausgestaltung des erfindungsgemäßen Ansteuersystems ist die Auswerteeinheit durch die Ansteuereinheit ausgebildet.

Die der linken und der rechten Karosserieseite zugeordneten Sensoren sind Seitenaufprallsensoren. Alternativ können die der linken und der rechten Karosserieseite zugeordneten Sensoren Aufprallsensoren (sog. Early-Crash-Sensoren) sein, welche im Bereich der Front der Karosserie angeordnet sind.

Mit der Erfindung können damit die in herkömmlichen Personenschutzsystemen verwendeten Sensoren sowie die zentrale Steuereinheit, die sog. Airbag Control Unit, verwendet werden. Das Verfahren basiert entweder auf den Signalen von Seitenaufprallsensoren für einen Seiten- bzw. Fenster-Airbag, wobei diese Sensoren typischerweise den Aufprall direkt von der Seite her detektieren. Alternativ können die Signale der in der Front des Kraftfahrzeugs verbauten Sensoren, sog. Early-Crash-Sensoren, verwendet werden. Hierdurch lässt sich das erfindungsgemäße Verfahren auf einfache und kostengünstige Weise realisieren.

Die Erfindung wird nachfolgend anhand der Figuren näher beschrieben. Es zeigen:
- Fig. 1: eine Draufsicht auf ein Kraftfahrzeug und die in dem Kraftfahrzeug verbauten Sensoren, deren Signale im Rahmen eines erfindungsgemäßen Verfahrens ver- wendet werden können,
- Fig. 2A: die Beschleunigungssignale eines linken und rechten Aufprallsensors (Early-Crash-Sensors) bei einem Frontalaufprall mit teilweiser Überdeckung bei ei- ner Geschwindigkeit von 64 km/h,
- Fig. 2B: die Beschleunigungssignale eines linken und rechten Seitenaufprallsensors bei einem Frontalaufprall mit teilweiser Überdeckung bei einer Geschwindigkeit von 64 km/h,
- Fig. 3A: die aus den Beschleunigungssignalen der Fig. 2A er- mittelten Geschwindigkeitssignale des linken und rechten Aufprallsensors,
- Fig. 3B: die aus den Beschleunigungssignalen der Fig. 2A er- mittelten Geschwindigkeitssignale des linken und rechten Seitenaufprallsensors,
- Fig. 3C: die in Abhängigkeit jeweiliger Geschwindigkeitssig- nale sich verändernden Zähler für die linke und rechte Kollisionsseite bis zum Erreichen eines Schwellenwerts, bei welchem ein der Kollisionsseite zugeordnetes Personenschutzmittel ausgelöst wird, und
- Fig. 4: einen beispielhaften Verfahrensablauf des erfin- dungsgemäßen Verfahrens.

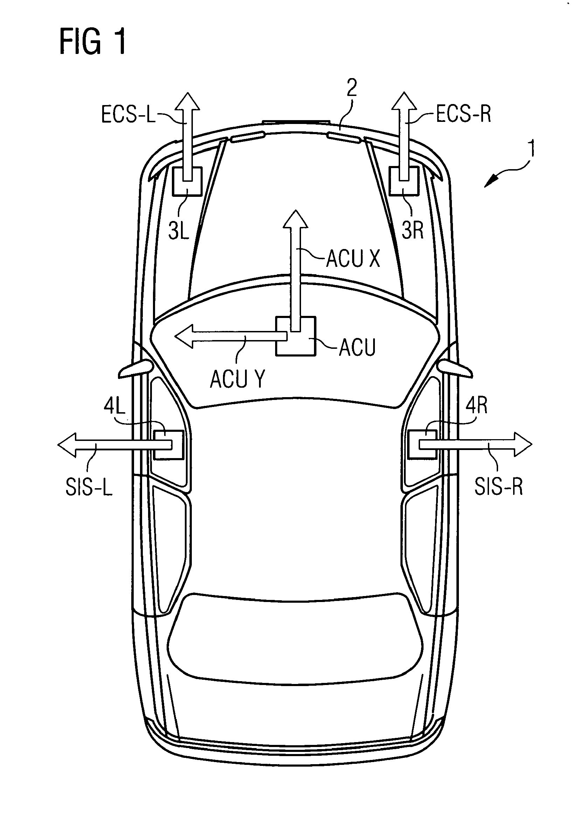

Fig. 1 zeigt in der Draufsicht ein Kraftfahrzeug 1. Dieses ist mit einer Mehrzahl an in der Figur nicht näher dargestellten Personenschutzmitteln versehen. Derartige Personenschutzmittel sind z.B. ein dem Fahrer bzw. Beifahrer zugeordneter Front-Airbag, auf der Fahrer- und Beifahrerseite angeordnete Fenster-Airbags (Window-Bag), welche sich im Falle ihrer Aktivierung zwischen den auf der jeweiligen Seite befindlichen Insassen und die A- sowie B-Säule erstrecken sowie gegebenenfalls weitere Seiten-Airbags, welche ebenfalls auf Fahrer- und Beifahrerseite vorgesehen sind. Im Folgenden wird die Fahrer-Seite als linke Seite (Kollisionsseite) des Kraftfahrzeugs und die Beifahrerseite als rechte Seite (Kollisionsseite) des Kraftfahrzeugs bezeichnet.

Um das Personenschutzsystem bzw. die von dem Personenschutzsystem umfassten Personenschutzmittel zu aktivieren, ist in dem Kraftfahrzeug 1 eine Ansteuereinheit ACU vorgesehen, welche üblicherweise am Fahrzeugtunnel befestigt ist. Die Ansteuereinheit ACU umfasst im Ausführungsbeispiel Sensoren zur Erfassung einer Beschleunigung in Fahrzeugrichtung (x-Richtung) sowie Beschleunigungen in Fahrzeugquerrichtung (y-Richtung). Die hierbei in der Ansteuereinheit ACU erfassten Beschleunigungen sind in der Figur mit ACU X und ACU Y gekennzeichnet, wobei deren Sensierungsrichtung durch die zugeordneten Pfeile gekennzeichnet ist.

Ferner sind im Bereich der Fahrzeugfront Aufprallsensoren (sog. Early-Crash-Sensoren) 3L und 3R vorgesehen, welche typischerweise im Bereich eines Stoßfängers 2 auf der linken und rechten Seite angeordnet sind. Die Aufprallsensoren 3L, 3R dienen zur frühest möglichen Detektion eines Frontaufpralls und sind als Beschleunigungsaufnehmer in Fahrzeugrichtung ausgestaltet.

Zur Detektion eines seitlichen Aufpralls sind typischerweise im Bereich der Fahrzeugtüren oder der B-Säule Seitenaufprallsensoren 4L und 4R vorgesehen. Diese dienen üblicherweise zur frühest möglichen Erkennung eines seitlichen Aufpralls und zur Ansteuerung eines an der Aufprallseite vorgesehenen Personenschutzmittels, in der Regel des Seiten- oder Fenster-Airbags.

Sämtliche der Sensoren 3L, 3R, 4L, 4R erfassen eine Beschleunigung ECS-L, ECS-R, SIS-L, SIS-R in der jeweils in Pfeilrichtung gekennzeichneten Achse bzw. Richtung und sind mit der Ansteuereinheit ACU des Personenschutzsystems gekoppelt, welche die Entscheidung über die Auslösung geeigneter Personenschutzmittel trifft und die jeweiligen Personenschutzmittel ansteuert.

Die im Zusammenhang mit Fig. 1 beschriebene Konfiguration ist typisch für Kraftfahrzeuge, welche als Personenschutzmittel Front-Airbags, Seiten-Airbags und/oder Fenster-Airbags umfassen.

Die Ermittlung einer Kollisionsseite im Falle eines Frontaufpralls mit teilweiser Überdeckung oder unter einem Winkel basiert auf der Auswertung der von den Aufprallsensoren 3L, 3R oder Seitenaufprallsensoren 4L oder 4R gelieferten Beschleunigungssignale ECS-L, ECS-R, SIS-L, SIS-R. Unter der Kollisionsseite wird im Rahmen der vorliegenden Beschreibung ein Aufprall des Kraftfahrzeugs 1 auf ein Hindernis auf der Fahrerseite (linke Kollisionsseite) oder der Beifahrerseite (rechte Kollisionsseite) verstanden.

Im Nachfolgenden wird davon ausgegangen, dass die Beschleunigungssignale ECS-L und ECS-R der Aufprallsensoren 3L, 3R ausgewertet werden, wobei sich das Verfahren identisch unter Auswertung der Beschleunigungssignale SIS-L und SIS-R der Seitenaufprallsensoren 4L, 4R durchführen lässt. Die parallele Auswertung der Beschleunigungssignale der Aufprallsensoren und der Seitenaufprallsensoren ist nicht vorgesehen.

Das dem Verfahren zu Grunde liegende Prinzip besteht darin, die von den Aufprallsensoren 3L, 3R gelieferten Beschleunigungssignale ECS-L und ECS-R hinsichtlich ihrer Intensität auszuwerten. Hierbei wird ein Vergleich der Intensität der Signale des linken Aufprallsensors 3L und des rechten Aufprallsensors 3R vorgenommen. Durch eine Subtraktion der Signalgrößen voneinander ergibt sich eine Vergleichsgröße, welche durch die Polarität gebildet ist. Anhand dieser Vergleichsgröße kann auf die Kollisionsseite des Aufpralls geschlossen werden. Damit kann ein der Kollisionsseite zugeordnetes Personenschutzmittel, entweder ein Seiten-Airbag oder ein Fenster-Airbag, angesteuert werden.

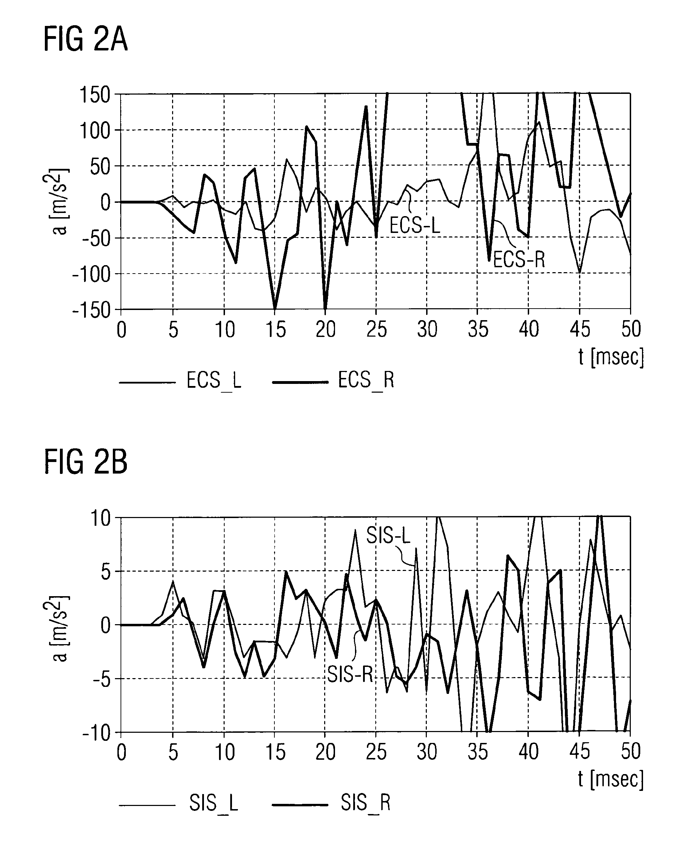

Wie aus den Fig. 2A und 2B hervorgeht, welche jeweils die Sensorsignale ECS-L und ECS-R des linken Aufprallsensors (Fig. 2A) bzw. die Sensorsignale SIS-L und SIS-R des linken Seitenaufprallsensors 4L, 4R (Fig. 2B) im Vergleich zeigen, weisen die jeweiligen Beschleunigungssignale starke Peaks in positiver und negativer Richtung auf. Die über die Zeit dargestellten Messwerte der jeweiligen Beschleunigungssensoren zeigen die Beschleunigungssignale bei einem Frontalaufprall mit teilweiser Überdeckung (Offset Deformable Barrier, ODB) bei einer Geschwindigkeit von 64 km/h. Über die y-Achse ist jeweils die Beschleunigung in m/s² dargestellt. Aus dieser Darstellung wird ersichtlich, dass für eine Auswertung eine Filterung der gemessenen Beschleunigungswerte zweckmäßig ist.

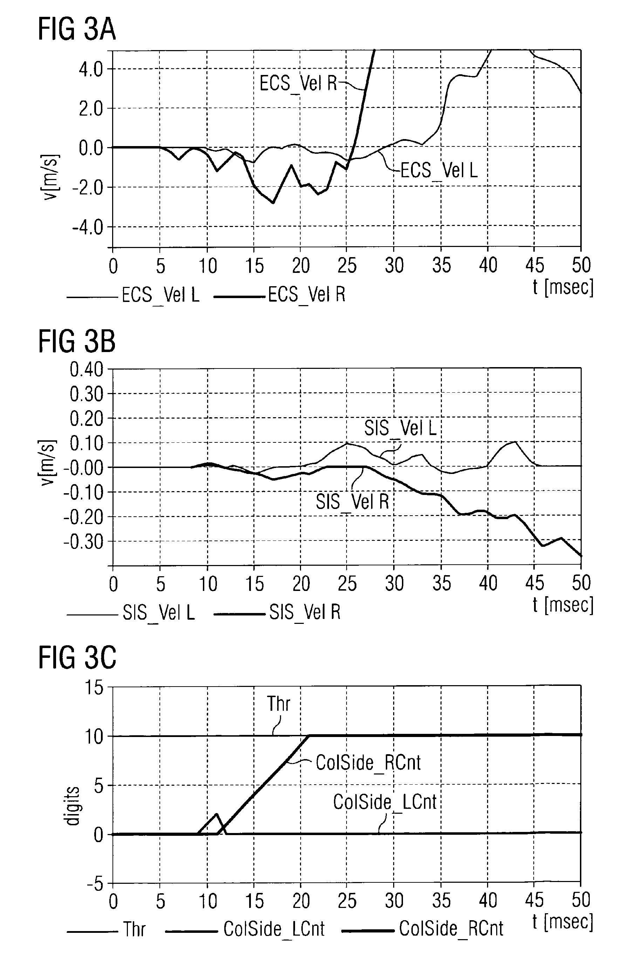

Dies ist in den Figuren 3A und 3B dargestellt, welche jeweils die aus den Beschleunigungssignalen der Fig. 2A und 2B ermittelten Geschwindigkeitssignale ECS_VelL, ECS_VelR und SIS_VelL, SIS_VelR des linken und rechten Aufprallsensors (Fig. 3A) und Seitenaufprallsensors (Fig. 3B) darstellen. Aus den ebenfalls über die Zeit dargestellten Geschwindigkeitssignalen (in m/s) ist ohne Weiteres ersichtlich, dass entweder das dem linken Beschleunigungssensor oder dem rechten Beschleunigungssensor zugeordnete Geschwindigkeitssignal eine stark ausgeprägte Polarität aufweist, aus welcher zuverlässig auf die Kollisionsseite des Aufpralls geschlossen werden kann.

Der aus der Auswertung der Geschwindigkeitswerte des linken und rechten Aufprallsensors 3L und 3R basierende Algorithmus verwendet jeweils einen Zähler für die linke und die rechte Kollisionsseite, welche in Abhängigkeit der Polarität erhöht bzw. auf einen Ausgangswert gesetzt werden. Ergibt sich beispielsweise aus der Polarität des linken und rechten Geschwindigkeitssignals, dass eine Kollision auf der rechten Seite vorliegt, so wird der Zähler für die rechte Kollisionsseite im Ausführungsbeispiel erhöht und der Zähler für die linke Kollisionsseite auf einen Ausgangswert, im Ausführungsbeispiel Null, zurückgesetzt. In entsprechender Weise gilt dies für den umgekehrten Fall. Sind der rechte und der linke Geschwindigkeitswert identisch, d.h. ist die Differenz Null, so werden die Zähler für die linke und die rechte Kollisionsseite weder erhöht noch zurückgesetzt. Die jeweiligen Zählerstände werden stattdessen eingefroren.

Die Ermittlung des ersten und zweiten Geschwindigkeitswerts sowie der Vergleich der beiden Werte finden in regelmäßigen Abständen, z.B. eine Millisekunde, statt. Erreicht einer der beiden Zähler einen vorgegebenen Schwellenwert, der beispielsweise in einem Speicher (z.B. EEPROM) hinterlegt sein kann, so wird ein Flag für die betreffende Kollisionsseite in dem Speicher gesetzt, welches von einer Auswerteeinheit zur Ermittlung einer Auslöseentscheidung für das der Kollisionsseite zugeordnete Personenschutzmittel berücksichtigt wird. Durch die Höhe des Schwellwertes kann ein minimaler Zeitrahmen festgelegt werden, innerhalb dem eine bestimmte Kollisionsseite regelmäßig ermittelt werden musste. Beispielsweise kann der Schwellenwert auf 10 (digits) gesetzt werden, so dass bei einer periodischen Ermittlung der Polarität jede Millisekunde innerhalb der 10 ms z.B. zehnmal die gleiche Kollisionsseite ermittelt werden musste. Durch das Rücksetzen des jeweils anderen Zählers werden Oszillationen ausgeschlossen.

Ist ein einer bestimmten Kollisionsseite zugeordnetes Flag einmal gesetzt, so wird der Algorithmus nicht mehr weiter durchlaufen bis ein Reset stattfindet. Erst danach startet der Algorithmus von vorne für die neue Ermittlung einer Kollisionsseite.

Zusätzlich kann vorgesehen sein, dass, wenn eine Kollisionsseite nicht festgestellt werden konnte, die Flags sowohl für die linke als auch die rechte Kollisionsseite gesetzt werden, so dass eine Auslösung der der rechten und der linken Kollisionsseite zugeordneten Personenschutzmittel erfolgt.

In Fig. 3C kann der Verlauf der der rechten und der linken Kollisionsseite zugeordneten Zähler (ColSide_LCnt für die linke Kollisionsseite und ColSide_RCnt für die rechte Kollisionsseite) ersehen werden, wobei sich der Zählerstand aus den Geschwindigkeitswerten der Figur 3A ergibt. Aus Fig. 3C ist ersichtlich, dass im vorliegenden Ausführungsbeispiel eine Kollision auf der rechten Seite des Kraftfahrzeugs vorliegt, welche zum Zeitpunkt t = 21 ms den vorgegebenen Schwellenwert von 10 digits erreicht hat.

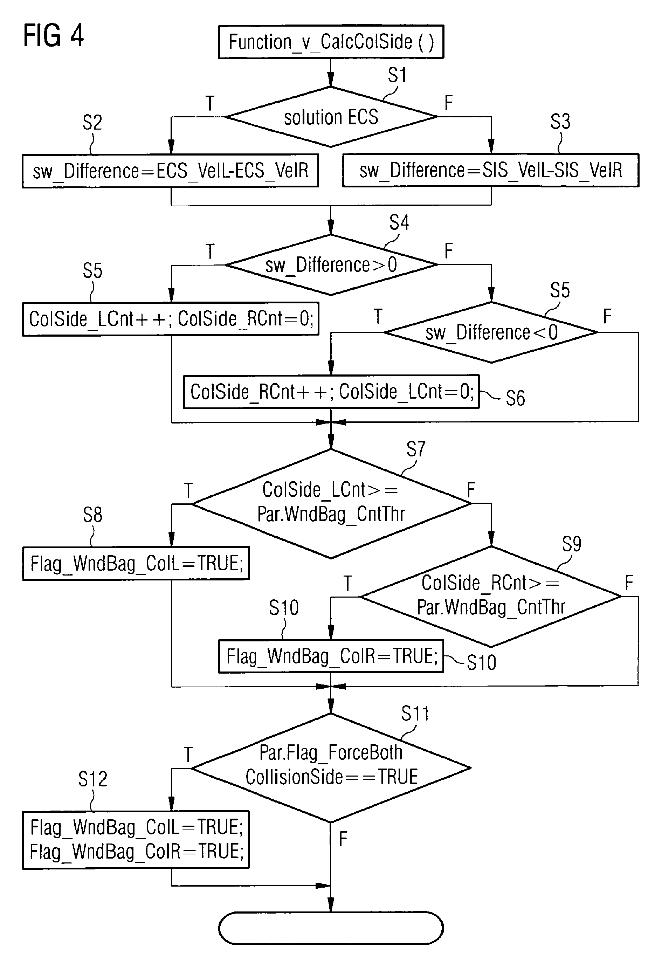

In Fig. 4 ist der Verfahrensablauf des erfindungsgemäßen Verfahrens beispielhaft illustriert. Das Verfahren kann in einer Funktion ("Function_v_CalcColSide") implementiert sein, wobei zunächst in bekannter Weise sämtliche Variablen auf einen Startwert gesetzt werden und die den Speicherzellen zugeordneten Flags auf einen Wert gesetzt werden, welcher durch die darauf zugreifende Ansteuereinheit des Personenschutzsystems nicht zu einer Auslösung eines einer jeweiligen Kollisionsseite zugeordneten Personenschutzmittels führt.

In einem Schritt S1 wird zunächst überprüft, ob für das Verfahren die Signale der Aufprallsensoren verwendet werden sollen. Ist dies der Fall (Bezugszeichen T), so wird eine Funktion (Bezugszeichen S2) ausgeführt, welche die Differenz ("sw_Difference") zwischen den gefilterten Beschleunigungssignalen ("ECS_VelL" bzw. "ECS_VelR") des linken und rechten Frontsensors 3L und 3R ermittelt. Ist die Bedingung des Schrittes S1 hingegen nicht erfüllt (Bezugszeichen F), so wird in einem Schritt S3 eine Funktion ausgeführt, welche die Differenz ("sw_Difference") zwischen den gefilterten Beschleunigungssignalen ("SIS_VelL" bzw. "SIS_VelR") der Seitenaufprallsensoren 4L und 4R ermittelt.

In einem Schritt S4 wird überprüft, ob die Differenz ("sw_Difference") größer als Null ist. Im Falle einer positiven Differenz ist die Polarität positiv. In diesem Fall (Bezugszeichen T) wird in Schritt S5 der Zähler ColSide_LCnt für die linke Kollisionsseite erhöht, während der Zähler ColSide_RCnt für die rechte Kollisionsseite auf einen Startwert Null zurückgesetzt wird. Ist die in Schritt S4 ermittelte Differenz zwischen den ermittelten gefilterten Beschleunigungssignalen hingegen nicht größer als Null (Bezugszeichen F), so wird in Schritt S5 überprüft, ob die Differenz kleiner als Null ist. Ist dies der Fall (Bezugszeichen T), so wird in Schritt S6 der Zähler ColSide_RCnt für die rechte Kollisionsseite inkrementiert und der Zähler ColSide_LCnt für die linke Kollisionsseite auf einen Startwert Null zurückgesetzt. Wird in Schritt S5 ermittelt, dass die Differenz auch nicht kleiner als Null ist, so werden die Zähler ColSide_LCnt und Col-Side_RCnt für die linke und rechte Kollisionsseite auf ihren jeweiligen Werten belassen und nicht verändert.

In Schritt S7 wird überprüft, ob der Zähler ColSide_LCnt für die linke Kollisionsseite einen vorgegebenen Schwellenwert Par.WndBag_CntThr erreicht hat. Trifft dies zu (Bezugszeichen T), so wird in Schritt S8 eine Variable Flag_WndBag_ColL auf den Wert TRUE gesetzt. Im anderen Fall (Bezugszeichen F) wird in Schritt S9 überprüft, ob der Zähler ColSide_RCnt für die rechte Kollisionsseite den Schwellenwert Par.WndBag_CntThr erreicht hat. Ist dies der Fall (Bezugszeichen T) wird in Schritt S10 eine Variable Flag_WndBag_ColR = TRUE gesetzt. Trifft dies nicht zu (Bezugszeichen F), so wird in Schritt S11 überprüft, ob eine Variable Par.Flag_ForceBothColisionSide dem Wert TRUE entspricht. Ist dies der Fall (Bezugszeichen T), so werden in Schritt S12 die Variablen Flag_WndBag_ColL und Flag_WndBag_ColR jeweils auf TRUE gesetzt. An dieser Stelle endet der Algorithmus bzw. beginnt von vorne. Die Variablen Flag_WndBag_ColL und Flag_WndBagColR sind beispielsweise dann auf TRUE gesetzt, wenn eine Kollisionsseite nicht innerhalb eines vorgegebenen Zeitrahmens, z.B. 20 ms vom Start des Algorithmus, detektiert werden konnte. Alternativ kann in dem Speicher ein Wert (z.B. ein Flag) hinterlegt sein, welcher dazu führt, dass die beiden Variablen Flag_WndBag_ColL und Flag_WndBag_ColR auf TRUE gesetzt werden. Ein solches Flag könnte beispielsweise für bestimmte Arten von Kollisionen hinterlegt sein, bei denen aufgrund einer Vorgabe sicherheitshalber die Personenschutzmittel beider Seiten des Kraftfahrzeugs angesteuert werden sollen. Das hierzu erforderliche Flag in dem Speicher kann manuell hinterlegt sein und auf der Auswertung verschiedener Crash-Situationen basieren. Trifft die in Schritt S11 abgefragte Bedingung nicht zu (Bezugszeichen F), so endet der Algorithmus ebenfalls bzw. beginnt von vorne.

Der in Verbindung mit Fig. 4 beschriebene Algorithmus wird periodisch durchgeführt. Hierdurch ist bei Detektion eines Frontalaufpralls mit teilweiser Überdeckung oder unter einem Winkel die Feststellung der Kollisionsseite möglich, so dass entsprechende, der Kollisionsseite zugeordnete Personenschutzmittel aktiviert werden können. Hierzu werden insbesondere durch eine entsprechende Ansteuereinheit der Personenschutzmittel die Variablen Flag_WndBag_ColL und Flag_WndBag_ColR enthaltenen Werte abgefragt.

Die Ansteuereinheit für die Personenschutzmittel und die Einheit zur Durchführung des beschriebenen Algorithmus kann identisch sein. Damit brauchen die gegenüber den bekannten Ansteuersystemen keine weiteren Hardware-Komponenten vorgesehen werden.

## Patentansprüche

1. Verfahren zum Erkennen einer Kollisionsseite unter einem Frontalaufprall mit teilweiser Überdeckung oder einem Winkel auf ein Kraftfahrzeug (1) zur Ansteuerung eines Personenschutzsystems, bei dem
- eine erste, einer Beschleunigung entsprechende Signalgröße (ECS_L; SIS_L) ermittelt wird, die von einem der linken Seite des Kraftfahrzeugs (1) zugeordneten Beschleunigungssensor (3L; 4L) abgegeben wird,
- eine zweite, einer Beschleunigung entsprechende Signalgröße (ECS_R; SIS_R) ermittelt wird, die von einem der rechten Seite des Kraftfahrzeugs (1) zugeordneten Beschleunigungssensor (3R; 4R) abgegeben wird,
- ein jeweiliges Signalniveau der ersten und der zweiten Signalgröße ermittelt wird,
- aus der ersten und der zweiten Signalgröße eine Vergleichsgröße (sw_Difference) ermittelt wird, welche ein Maß dafür ist, ob die erste oder die zweite Signalgröße betragsmäßig größer als die jeweils andere Signalgröße ist, und
- aus der Vergleichsgröße (sw_Difference) auf die Kollisionsseite des Aufpralls geschlossen wird und ein der Kollisionsseite zugeordnetes Personenschutzmittel, insbesondere ein Seiten- oder Fenster-Airbag, angesteuert wird.

2. Verfahren nach Anspruch 1, bei dem die erste Signalgröße (ECS_L; SIS_L) aus einer, insbesondere nach links gerichteten, Querbeschleunigung oder einer in Fahrtrichtung wirkenden Längsbeschleunigung ermittelt wird.

3. Verfahren nach Anspruch 1, bei dem die zweite Signalgröße (ECS_R; SIS_R) aus einer, insbesondere nach rechts gerichteten, Querbeschleunigung oder einer in Fahrtrichtung wirkenden Längsbeschleunigung ermittelt wird.

4. Verfahren nach einem der bisherigen Ansprüche, bei dem die erste und/oder die zweite Signalgröße (ECS_L, SIS_L, ECS_R, SIS_R) aus einem gefilterten Beschleunigungssignal ermittelt werden.

5. Verfahren nach Anspruch 4, bei dem als gefiltertes Beschleunigungssignal ein aus den gemessenen Beschleunigungswerten ermittelter Geschwindigkeitswert (ECS_VelL, SIS_VelL, ECS_VelR, SIS_VelR) verwendet wird.

6. Verfahren nach einem der vorherigen Ansprüche, bei dem für die linke Seite und für die rechte Seite des Kraftfahrzeugs jeweils ein Zähler (ColSide_LCnt; ColSide_RCnt) vorgesehen ist, wobei
- der Zähler (ColSide_LCnt) für die linke Seite erhöht/erniedrigt und der Zähler (ColSide_RCnt) für die rechte Seite auf einen Ausgangswert gesetzt wird, wenn aus der Vergleichsgröße auf eine Kollision mit der linken Seitenhälfte geschlossen wird, und
- der Zähler (ColSide_RCnt) für die rechte Seite erhöht/erniedrigt und der Zähler (ColSide_LCnt) für die linke Seite auf einen Ausgangswert gesetzt wird, wenn aus der Vergleichsgröße auf eine Kollision mit der rechten Seitenhälfte geschlossen wird.

7. Verfahren nach Anspruch 6, bei dem die Zähler (ColSide_LCnt, ColSide_RCnt) für die linke und die rechte Seite auf den jeweiligen Werten verbleiben, wenn aus der Vergleichsgröße weder auf eine Kollision mit der rechten noch mit der linken Seitenhälfte geschlossen werden kann.

8. Verfahren nach einem der Ansprüche 6 oder 7, bei dem die Zähler (ColSide_LCnt, ColSide_RCnt) für die linke Seite und für die rechte Seite jeweils mit einem Schwellenwert (Thr) verglichen werden, wobei beim Erreichen des Schwellenwerts (Thr) ein einer Auslösesituation entsprechender Wert für die betreffende Karosserieseite in einem Speicher hinterlegt wird, der durch eine Ansteuereinheit des Personenschutzsystems auslesbar ist.

9. Verfahren nach Anspruch 8, bei dem die Ermittlung der Vergleichsgröße (sw_Difference) beendet wird, sobald in dem Speicher der einer Auslösesituation entsprechende Wert gespeichert ist.

10. Verfahren nach einem der vorherigen Ansprüche, bei dem in dem Fall, in dem bei einer Kollision keine Karosserieseite eines Aufpralls ermittelt werden kann, in dem Speicher für die linke und die rechte Seite jeweils ein einer Auslösesituation entsprechender Wert hinterlegt wird.

11. Computerprogrammprodukt das direkt in den internen Speicher eines digitalen Computers geladen werden kann und Softwarecodeabschnitte umfasst, mit denen die Schritte gemäß einem der vorherigen Ansprüche ausgeführt werden, wenn das Produkt auf einem Computer läuft.

12. Ansteuersystem für ein Personenschutzmittel in einem Kraftfahrzeug (1), mit
- einer Auswerteeinheit,
- einem der linken Karosserieseite zugeordneten Beschleunigungssensor (3L; 4L), der eine einem Beschleunigungssignal entsprechende erste Signalgröße (ECS_L; SIS_L) an die Auswerteeinheit abgeben kann,
- einem der rechten Karosserieseite zugeordneten Beschleunigungssensor (3R; 4R), der eine einem Beschleunigungssignal entsprechende zweite Signalgröße (ECS_R; SIS_R) an die Auswerteeinheit abgeben kann,
- wobei die Auswerteeinheit dazu ausgebildet ist,
- ein jeweiliges Signalniveau der ersten und der zweiten Signalgröße zu ermitteln,
- aus der ersten und der zweiten Signalgröße eine Vergleichsgröße (sw_Difference) zu ermitteln, welche ein Maß dafür ist, ob die erste oder die zweite Signalgröße betragsmäßig größer als die jeweils andere Signalgröße ist, und
- aus der Vergleichsgröße (sw_Difference) auf die Kollisionsseite des Aufpralls zu schließen, und
- einen der Kollisionsseite zugeordneten Parameterwert einer Ansteuereinheit für das Personenschutzmittel zur Verfügung zu stellen.

13. Ansteuersystem nach Anspruch 12, bei dem die Auswerteeinheit durch die Ansteuereinheit ausgebildet ist.

14. Ansteuersystem nach einem der Ansprüche 12 oder 13, bei dem die der linken und der rechten Karosserieseite zugeordneten Sensoren (4L, 4R) Seitenaufprallsensoren sind.

15. Ansteuersystem nach einem der Ansprüche 12 oder 13, bei dem die der linken und der rechten Karosserieseite zugeordneten Sensoren (3L, 3R) Aufprallsensoren sind, die im Bereich der Front der Karosserie angeordnet sind.

16. Ansteuersystem nach einem der Ansprüche 12 bis 15, bei dem dieses weitere Mittel zur Durchführung des Verfahrens nach einem der Ansprüche 2 bis 10 umfasst.
